# EUROPÄISCHE PATENTSCHRIFT

(11) **EP 0 335 154 B1**
(45) Veröffentlichungstag und Bekanntmachung des Hinweises auf die Patenterteilung: **24.02.1993**
(21) Anmeldenummer: 89104318.4
(22) Anmeldetag: 10.03.1989
(51) Int. Cl.: F16L 57/00, F16L 11/12

(54) **Schlauchleitung mit einem weichelastischen Mantel**
Hose with a soft and elastic cover
Conduite souple avec un entourage souple et élastique

(30) Priorität: 30.03.1988 DE 3810861
(43) Veröffentlichungstag der Anmeldung: 04.10.1989
(73) Patentinhaber: Bosch-Siemens Hausgeräte GmbH, 81669 München (DE)
(72) Erfinder: Proppe, Wolfgang, D-1000 Berlin 20 (DE)

(56) Entgegenhaltungen:
- EP-A- 0 092 026
- LU-A- 82 956
- US-A- 4 410 012

## Beschreibung

Die Erfindung geht aus von einer Schlauchleitung mit einem weichelastischen Mantel für eine zum Schleudern eingerichtete Waschmaschine.

Im Innenraum von bekannten Waschmaschinen sind unterschiedliche Schlauchleitungen verlegt. Schlauchleitungen, die zwischen ortsfesten und zusammen mit dem Laugenbehälter-Aggregat beim Schleudern stark schwingenden Schlauchanschlüssen gezogen sind, schwingen beim Schleudern ebenfalls. Zum Schutze dieser Schlauchleitungen vor schnellem Verschleiß und zur Geräuschdämpfung hat man über solche Schlauchleitungen Ronden aus weichelastischem Material, z.B. aus Schaumstoff, gezogen, die beim Schwingen ein ständiges Schlagen der Schlauchleitung an irgendwelchen Teilen innerhalb der Waschmaschine verhindern.

Der Erfindung liegt die Aufgabe zugrunde, Mittel für eine solche Schlauchleitung anzugeben, die das Aufziehen derartiger Ronden entbehrlich machen, ohne auf den Schutz der Schlauchleitungen und auf die Geräuschdämpfung verzichten zu müssen.

Erfindungsgemäß wird diese Aufgabe dadurch gelöst, daß die Außenmantelfläche mit entlang der Längserstreckung der Schlauchleitung geführten, am Umfang verteilten Rippenleisten versehen ist, die einen breiten Fuß und einen spitzwinkligen First aufweisen und einen sternförmigen Querschnitt für die Schlauchleitung bilden.

Zwar zeigt die LU-A-82 956 ein flexibles oder steifes Rohr zum Transport eines Wärmeträgers mit auf dem Umfang des Rohrs in Längsrichtung verlaufenden, radialen Vertiefungen. Diese Vertiefungen bilden zwischen sich konvexe Auswölbungen, deren Elastizität für den Patentgegenstand unzureichend wäre. Das Material der bekannten Rohre ist nicht weichelastisch, so daß ein solches Rohr für die Verbindung von gegeneinander schwingenden Teilen ungeeignet wäre und außerdem das Aufziehen von Geräusche und Abrieb vermindernden Ronden nicht entbehrlich machen würde.

Demgegenüber erhöhen die erfindungsgemäßen Rippenleisten den Abstand zwischen der Schlauchleitung und anderen Maschinenteilen. Da die Rippenleisten erheblich nachgiebiger sind als die Wandung der Schlauchleitung selbst, wird beim Schlagen und Scheuern an Maschinenteilen nicht soviel Material und vor allem nicht von der Außenmantelfläche abgetragen wie bei den bekannten glattwandigen Schlauchleitungen. Außerdem entstehen damit erheblich weniger Geräusche beim Schleudern als mit glattwandigen Schlauchleitungen. Die sternförmige Verteilung der Rippenleisten schützt die Schlauchleitung im übrigen von allen Seiten.

Wenn die Firstkante gemäß einer vorteilhaften Ausbildung der Erfindung eine besonders weichelastische Rippe bildet, ist auch die Geräuschdämmung besonders gut.

Eine noch bessere Nachgiebigkeit der Rippen läßt sich dadurch erzielen, daß die Querschnittsflächen der Rippenleisten gebogen oder geknickt sind oder daß die Rippenleisten mit steilem Winkel zur Längserstreckung der Schlauchleitung um diese gewendelt sind.

Anhand einiger in der Zeichnung dargestellter Ausführungsbeispiele ist die Erfindung nachstehend erläutert.

Es zeigen:
- Fig. 1: schematisch eine durchsichtige Waschmaschine mit einer von Ronden bezogenen Schlauchleitung,
- Fig. 2: den Querschnitt einer erfindungsgemäß ausgestalteten Schlauchleitung und
- Fig. 3 bis Fig. 5: verschiedene Querschnitte von anderen Ausführungsbeispielen von Rippenleisten.

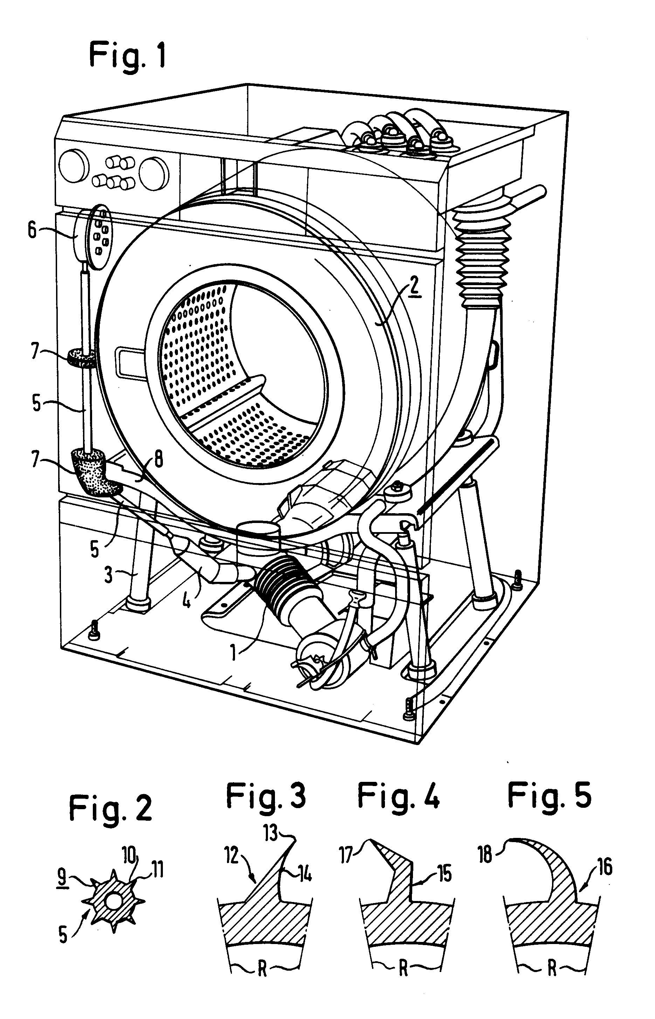

Am Abflußschlauch 1 aus dem über Federbeine 3 schwingbeweglich gelagerten Laugenbehälter 2 der in Fig. 1 dargestellten Waschmaschine ist ein Druckgebergehäuse 4 angeschlossen, das über eine Schlauchleitung 5 mit einem oben in der Waschmaschine ortsfest angeordneten Membranschalter 6 gebunden ist. Über die Schlauchleitung sind bekanntermaßen Ronden 7 aus weichelastischem Schaumstoff gezogen und in solchen Höhen fixiert, in denen die Schlauchleitung 5 mit Teilen der Waschmaschine in Berührung kommen kann. Solche Teile können beispielsweise das Traggestell 8 für den Laugenbehälter 2 oder die Außenfläche des Laugenbehälters selbst sein. Beim Schleudern schwingen diese Teile stark und würden mit der Schlauchleitung 5 zusammenschlagen, wären sie nicht geschützt.

Erfindungsgemäß ist die Schlauchleitung 5 durch Rippenleisten 9, 12, 15 oder 16 geschützt, die in der Längserstrekkung der Schlauchleitung an ihrem Mantel entlang verlaufen. Gemäß Fig. 2 sind acht solcher Rippenleisten sternförmig am Umfang verteilt. Sie weisen einen dreieckigen Querschnitt mit breitem Fuß 10 und spitzwinkligem First 11 auf und stehen radial auf der Mantelfläche der Schlauchleitung.

Gemäß Fig. 3 können die dreieckig profilierten Rippenleisten 12 aber auch in einem Winkel zum Radius R des Schlauchquerschnittes auf der Mantelfläche stehen. Zur Erhöhung der Nachgiebigkeit der Lippe 13 kann die kürzere Flanke 14 der Rippenleiste 12 konkav geformt sein.

Die in Fig. 4 dargestellte Rippenleiste 15 hat einen abgewinkelten Dreiecks-Querschnitt, damit der Querschnitt insgesamt etwas biegsamer wird.

Die im Querschnitt sichelförmig gebogene Rippenleiste 16 gemäß Fig. 5 dürfte hinsichtlich der Nachgiebigkeit die besten Voraussetzungen bieten.

Als Werkstoff für die Schlauchleitung 5 kommt vorzugsweise Gummi in Betracht, so daß bei flacher Ausformung der Lippen 11, 13, 17 oder 18 ein Maximum an Werkstoffschonung und Geräuschdämpfung zu erzielen ist.

Die mehr oder weniger zahlreich am Umfang verteilten Rippenleisten können parallel zur Mittelachse der Schlauchleitung verlaufen oder um die Schlauchleitung herum gewendelt sein. Der Wendelwinkel sollte aber nicht wesentlich von 90° zur Querschnittsebene der Schlauchleitung abweichen.

## Patentansprüche

1. Schlauchleitung mit einem weichelastischen Mantel für eine zum Schleudern eingerichtete Waschmaschine, **dadurch gekennzeichnet,** daß die Außenmantelfläche mit entlang der Längserstreckung der Schlauchleitung (5) geführten, am Umfang verteilten Rippenleisten (9, 12, 15, 16) versehen ist, die einen breiten Fuß (10) und einen spitzwinkligen First (11) aufweisen und einen sternförmigen Querschnitt für die Schlauchleitung (5) bilden.

2. Schlauchleitung nach Anspruch 1, dadurch gekennzeichnet, daß die Firstkante eine besonders weichelastische Lippe (11, 13, 17, 18) bildet.

3. Schlauchleitung nach Anspruch 1 oder 2, dadurch gekennzeichnet, daß die Querschnittsflächen der Rippenleisten (15, 16) gebogen oder geknickt sind.

4. Schlauchleitung nach einem der Ansprüche 1 bis 3, dadurch gekennzeichnet, daß die Rippenleisten (9, 12, 15, 16) mit steilem Winkel zur Längserstreckung der Schlauchleitung (5) um diese gewendelt sind.

## Claims

1. Hose duct with a soft elastic casing for a washing machine equipped for spinning, characterised thereby that the outer casing surface is provided with rib strips (9, 12, 15, 16) which are led along the longitudinal extent of the hose duct (5), are distributed at the circumference, have a wide foot (10) and an acute-angled ridge (11) and form a star-shaped cross-section for the hose duct (5).

2. Hose duct according to claim 1, characterised thereby that the ridge forms an especially soft elastic lip (11, 13, 17, 18).

3. Hose duct according to claim 1 or 2, characterised thereby that the cross-sectional surfaces of the rib strips (15, 16) are curved or kinked.

4. Hose duct according to one of claims 1 to 3, characterised thereby that the rib strips (9, 12, 15, 16) are wound around the hose duct (5) at a steep angle to the longitudinal extent thereof.

## Revendications

1. Conduite souple comportant une enveloppe souple, destinée à un lave-linge prévu pour l'essorage, caratérisée par le fait que la surface périphérique extérieure de la conduite souple (5) est pourvue de nervures (9, 12, 15, 16) qui sont réparties sur la circonférence et s'étendent dans la direction longitudinale le long de ladite conduite souple, lesquelles nervures ont un pied (10) large et un sommet (11) acutangle et confèrent à la conduite souple (5) une section droite en étoile.

2. Conduite souple selon la revendication 1, caractérisée par le fait que l'arête de somment forme une lèvre (11, 13, 17, 18) à très grande souplesse.

3. Conduite souple selon la revendication 1 ou 2, caractérisée par le fait que les surfaces en section droite des nervures (15, 16) sont courbées ou pliées.

4. Conduite souple selon l'une des revendications 1 à 3, caractérisée par le fait que les nervures (9, 12, 15, 16) s'enroulent autour de la conduite souple (5) avec un angle de pente élevé par rapport à l'axe longitudinal de celle-ci.
